# EUROPÄISCHE PATENTANMELDUNG

(11) **EP 0 712 003 A2**
(43) Veröffentlichungstag der Anmeldung: **15.05.1996**
(21) Anmeldenummer: 95117226.1
(22) Anmeldetag: 02.11.1995
(51) Int. Cl.: G01P 3/54, G01P 1/00

(54) **Vorrichtung zur Bestimmung der Umlaufgeschwindigkeit des Übertragungsmittels eines stufenlosen Umschlingungsgetriebes**

(30) Priorität: 11.11.1994 DE 4440278
(71) Anmelder: TEMIC TELEFUNKEN microelectronic GmbH, D-74072 Heilbronn (DE)
(72) Erfinder: Genzel, Michael, D-90574 Rosstal (DE); Hettich, Gerhard, Dr., D-90599 Dietenhofen (DE); Ramm, Norbert, D-38106 Braunschweig (DE)
(74) Vertreter: Maute, Hans-Jürgen, Dipl.-Ing.

(57) **Zusammenfassung**

Zur Ermittlung der Umlaufgeschwindigkeit des Übertragungsmittels (3) in den Kegelscheibensätzen (1, 2) eines stufenlosen Umschlingungsgetriebes wird eine Vorrichtung vorgeschlagen, die aus einem sich auf dem Übertragungsmittel (3) auf dem Innenseiten der Kegelscheiben abstützenden und einen Sensor (10, 16) aufweisenden Gleitschuh (4, 15) besteht, der über eine durch eine Feder (6) belastete Schwinge (5) in einem Drehgelenk (7) gelagert mit dem Getriebegehäuse (8) verbunden ist.

In Kenntnis der Umfangsgeschwindigkeit des Übertragungsmittels (3), der Drehzahlen (N₁, N₂) der Kegelscheibensätze (1, 2) sowie der wirksamen Übertragungsradien (r₁, r₂) läßt sich der Schlupf zwischen dem Übertragungsmittel (3) und den Kegelscheibensätzen (1, 2) ermitteln. Durch einen Vergleich von zuvor festgelegten maximalen Schlupfwerten mit den ermittelten Schlupfwerten kann der maximal notwendige Anpressdruck der in jedem Kegelscheibensatz (1, 2) vorhandenen axial beweglichen Kegelscheibe (9) optimal eingestellt werden.

## Beschreibung

Die Erfindung betrifft eine Vorrichtung zur Bestimmung der Umlaufgeschwindigkeit eines Übertragungsmittels zwischen zwei in einem Getriebegehäuse angeordneten Kegelscheibensätzen eines stufenlosen Umschlingungsgetriebes gemäß dem Oberbegriff des Patentanspruchs 1.

Stufenlose Umschlingungsgetriebe, wie sie beispielsweise aus der DE-OS 42 27 958.8 bekannt sind, sind mit zwei Kegelscheibensätzen ausgestattet, zwischen denen ein Übertragungsmittel, etwa eine Kette oder ein Schubgliederband angeordnet ist. Dieses Übertragungsmittel dient zur Übertragung der von der Brennkraftmaschine eines Kraftfahrzeuges angebotenen Antriebskraft von einer Antriebswelle auf eine Abtriebswelle. Zur Variierung des Übersetzungsverhältnises und damit des Antriebsmomentes für die Fahrzeugräder ist üblicherweise eine Kegelscheibe eines jeden Kegelscheibensatzes auf der Antriebs- bzw. Abtriebsachse des Getriebes hydraulisch verschiebbar. Durch die Veränderung des Abstandes der Kegelscheiben zueinander ergeben sich in den jeweiligen Kegelscheibensätzen unterschiedliche wirksame Übertragungsradien für das Übertragungsmittel.
Die Höhe des Druckes, mit dem das Übertragungsmittel bei eingestelltem Abstand der jeweiligen Kegelscheiben zwischen diesen zur Kraftübertragung angepresst wird, ist abhängig von der an dem Übertragungsmittel wirkenden Umfangskraft und wird von einer Getriebesteuerungseinrichtung automatisch eingeregelt, wobei üblicherweise deutliche Unsicherheitszuschläge notwendig sind.

Für einen guten Gesamtwirkungsgrad bzw. für minimale Leistungsverluste eines solchen Getriebes ist es notwendig, diesen Anpressdruck möglichst klein zu halten. Zudem läßt sich bei genauer Kenntnis des aktuell notwendigen Anpressdruckes der Kegelscheiben gegen das Übertragungsmittel die maximale Leistung der Hydraulikpumpe für das Kegelscheiben-Verstellsystem niedriger ansetzen, wodurch einerseits Bauraum im Getriebe und andererseits Kosten zu sparen sind.

Die Aufgabe der Erfindung besteht daher darin, eine Vorrichtung vorzustellen, mit deren Hilfe die optimale Anpresskraft der Kegelscheiben gegen das Übertragungsmittel ermittelbar ist. Die Lösung dieser Aufgabe ergibt sich aus den Merkmalen des Patentanspruchs 1. Vorteilhafte Ausgestaltungen und Weiterbildungen der Erfindung sind den Unteransprüchen entnehmbar.

Der Erfindung liegt die Erkenntnis zugrunde, daß sich die optimale Anpresskraft der Kegelscheiben gegen das Übertragungsmittel indirekt durch den Schlupf des Übertragungsmittels zwischen den Kegelscheibenpaaren herleiten läßt, der seinerseits aus der Differenz von der Geschwindigkeit des Übertragungsmittes zu der Umfangsgeschwindigkeit einer Kegelscheibe am Ort der Kraftübertragung auf das Übertragungsmittel ermitelbar ist. Mit der Getriebesteuerungseinrichtung kann dann bei Kenntnis des Schlupfes für jeden Betriebspunkt die richtige Anpreßkraft eingestellt werden. Erfindungsgemäß wird daher eine Vorrichtung zur Messung der Geschwindigkeit des Übertragungsmittels vorgeschlagen, bei der ein Sensorelement an einer drehbar gelagerten Schwinge befestigt ist, die mit einem Gleitschuh durch Federkraft gegen das Umschlingsmittel angedrückt wird. Mit Hilfe dieses Sensorelementes lassen sich Abstandsmarkierungen auf dem Übertragungsmittel erfaßen und somit seine Geschwindigkeit ermitteln. Ein derartiger Sensor kann ein elektromagnetisch oder optisch arbeitender Sensor, wie beispielsweise ein Hall-Sensor oder ein Foto-Sensor sein.

In einer anderen Ausführungsform kann an der Schwinge ein etwa V-förmiger Gleitschuh angebracht sein, in dem wiederum ein derartiges Sensor-Element befestigt ist. Dieser Gleitschuh stützt sich in diesem Ausführungsbeispiel allerdings nicht auf dem Übertragungsmittel sondem auf den Kegelscheibeninnenflächen ab und wird durch diese bei ihrer axialen Verstellung radial nachgeführt. In jedem Fall bewegt sich dieser alternative Gleitschuh aber dicht oberhalb des Übertragungsmittels, so daß mittels des Sensors Abstandsmarkierungen auf dem Übertragungsmittel erfaßbar sind. Diese Abstandsmarkierungen können beispielsweise die einzelnen Kettenglieder oder Schubglieder des als Übertragungskette oder Schubgliederband ausgebildeten Übertragungsmittels des Getriebes sein.

Zum besseren Verständnis der Erfindung ist der Beschreibung eine Zeichnung beigelegt, mit deren Hilfe die erfindungsgemäße Vorrichtung erläuterbar ist.

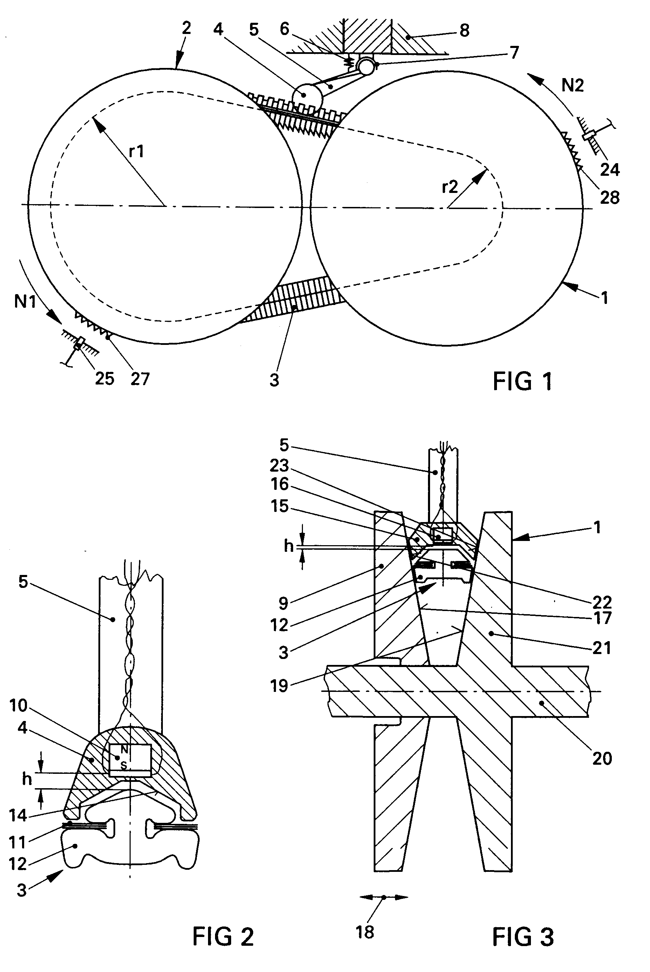

Figur 1 zeigt eine Seitenansicht der zwei Kegelscheibensätze 1,2 des Umschlingungsgetriebes, die auf einer hier nicht dargestellten Getriebeeingangs- bzw. Getriebeausgangswelle angeordnet sind. Jeder der beiden Kegelscheibensätze bestehen in an sich bekannter Weise aus einer auf der jeweiligen Getriebewelle fest angeordneten Kegelscheibe 21 und einer auf dieser Welle axial verschiebbaren zweiten Kegelscheibe 9 (siehe hierzu auch Figur 3).

Beide Kegelscheibensätze 1, 2 sind von einem Übertragungsmittel 3 umschlungen, daß beispielsweise als Antriebskette oder als Schubgliederband ausgebildet sein kann. In Abhängigkeit vom axialen Abstand der zu einem jeweiligen Kegelscheibensatz gehörenden Kegelscheiben stellt sich für das Übertragungsmittel 3 ein wirksamer Übertragungsradius r₁, r₂ ein, durch deren Verstellung mittels einer hier nicht dargestellten hydraulische Verstellungvorrichtung für die Kegelscheiben das auf die Antriebsräder übertragbare Drehmoment und die Antriebsdrehzahl verändert werden kann.

Da das Übertragungsmittel 3 zur Vermeidung von Leistungsverlusten und zur Verhinderung von Materialschäden an dem Übertragungsmittel und den Kegelscheibeninnenflächen schlupffrei betrieben werden soll, wird der Anpressdruck mit dem die axial bewegliche Kegelscheibe 9 gegen das Übertragungsmittel gedrückt wird immer so groß gewählt, daß ein Schlupf wirksam soweit unterbunden wird, daß einerseits die Scheiben und das Übertragungsmittel eine ausreichende Lebensdauer erhalten und andererseits die Verluste in diesen Getriebebereich minimiert werden.

Zur Steuerung des optimalen Anpressdruckes für die axial verschiebbare Kegelscheibe 9 eines jeden Kegelscheibensatzes 1, 2 wird die Information über den Schlupf des Übertragungsgliedes 3 zwischen den beiden Kegelscheibensätzen ermittelt und in einem Regelkreis von der Getriebesteuerungseinrichtung minimiert. Dazu dient erfindungsgemäß eine Vorrichtung, bei der ein geeigneter Sensor 10 in einem Gleitschuh 4 befestigt und unmittelbar über dem Übertragungsmittel 3 zur Ermittlung von Abstandsmarkierungen auf diesem Übertragungsmittel geführt wird. Der Gleitschuh 4 ist mit einer Schwinge 5 verbunden, die von einer Feder 6 belastet in einem Drehgelenk 7 gelagert ist, daß seinerseits mit dem Getriebegehäuse 8 verbunden ist.

In Figur 2 ist ein Querschnitt durch den Gleitschuh 4 und durch das als Schubgliederband ausgebildete Übertragungsmittel 3 dargestellt. Dieses Schubgliederband besteht aus einzelnen Blockelementen 12, die zwischen entlang der Längserstreckung des Übertragungsmittels 3 umlaufenden Federpakten 11 eingespannt sind. Der Gleitkörper 4 weist eine Innenkontour 14 auf, die in etwa der Geometrie des oberen Teils der Blockelemente 12 und der Federpakte 11 des Übertragungsmittels 3 entspricht. Dadurch kann dieser Gleitkörper entweder auf den Flanken diesen oberen Teils der Blockelemente 12 oder auf den Federpaketen 11 des Übertragungsmittels 3 gleiten. Innerhalb des Gleitkörpers 4 ist ein geeigneter Sensor 10 zur Erkennung von Markierungen auf dem Übertragungsmittel 3 angeorndet. Im einfachsten Teil können diese Markierungen durch die dem Sensorelement zuweisenden Spitzen der Blockelemente 12 des Übertragungsmittels 3 gebildet werden.

Das Sensorelement 10 kann beispielsweise als Hall-Sensor oder als Fotor-Sensor ausgebildet sein. In dem hier vorgestellten Ausführungsbeispiel ist ein Hall-Sensor 10 abgebildet, der im Abstand h von der Spitze der Blockelemente 12 des Übertragungsmittels 3 positioniert ist. Von diesem Sensor 10 führen nicht weiter bezeichnete Leitungen zu der hier nicht dargestellten Getriebesteuereinrichtung, mit der der Hydraulikdruck für die Verstellung der Kegelscheiben 9 in Abhängigkeit vom Schlupf des Übertragungsmittels 3 einstellbar ist.

In Figur 3 ist eine alternative Ausführungsform des Gleitkörpers dargestellt. In diesem Fall wird der Gleitkörper 15 durch ein Bauteil gebildet, daß sich mit seinen Außenflanken an den Kegelscheibeninnenwänden 17, 19 abstützt und dabei so geformt ist, daß dieser Gleitkörper 15 mit dem schon vorbenannten Abstand h über dem in seiner Postion nur schematisch dargestellten Blockelement 12 des Übertragungsmittels 3 angeordnet ist. Auch hier verfügt der Gleitkörper 15 über ein Sensorelement 16, das zur Erkennung von Abstandsmarken auf dem Übertragungsmittel 3 geeignet ist. Eine axiale Verschiebung der Kegelscheibe 9 (entsprechend Pfeil 18) führt dazu, daß das Übertragungsmittel 3 ebenso wie der Gleitkörper 15 sich radial an den Innenwänden 17, 19 der Kegelscheiben 9, 21 unter Beibehaltung des Abstandes h zwischen den Blockelementen 12 und dem Sensor 16 radial nach innen oder außen bewegen, so daß jederzeit die Umfangsgeschwindigkeit des Übertragungsmittels 3 feststellbar ist.

Zur Ermittlung des Schlupfes mittels der Getriebesteuereinrichtung ist neben der Messung der Umfangsgeschwindigkeit des Übertragungsmittels 3 zusätzlich die üblicherweise erfolgende Messung der Drehzahl N1 N2 der Kegelscheiben nötig. Dies geschieht durch Drehzahlsensoren 24, 25, die Markierungen 27, 28 an den Kegelscheiben erkennen.

Die Sensorinformation über die Umfangsgeschwindigkeit des Übertragungsmittels 3 und die Drehzahlinformationen über die beiden Kegelscheibensätze 1, 2 werden der Getriebesteuereinrichtung zugeführt und zur Berechnung des Schlupfes zwischen dem Übertragungsmittel und dem jeweiligen Scheibensatz verwendet. Durch den einfachen kinematischen Zusammenhang, wonach sich der Schlupf des Übertragungsmittel 3 aus der Umfangsgeschwindigkeit des Übertragungsmittels abzüglich der Umfangsgeschwindigkeit des wirksamen Kegelscheibensegmentes (Radius r₁, r₂) ergibt, kann jederzeit der tatsächliche Schlupf im Getriebe errechnet werden. In Abhängigkeit von der Abweichung von zuvor durch Versuche ermittelte und abgespeicherte zulässige Schlupfwerte wird dann der Druck in den einzelnen Anpresskolben des hydraulischen Stellungssystems über geeignete Regelalgorithmen nachgestellt. Dadurch ist es möglich, den Stelldruck für die Kegelscheibe auf einen Wert abzusenken, der einerseits ein sicheres Greifen des Übertragungsmittels 3 in den Kegelscheibensätzen gewährleistet, und andererseits keine unnötige Pumpenarbeit verursacht. Gleichzeitig kann unter Berücksichtigung anderer hydraulischer Verbraucher in dem Getriebe eine eventuell vorhandene Verstellpumpe nachgeregelt werden.

## Patentansprüche

1. Vorrichtung zur Bestimmung der Umlaufgeschwindigkeit eines Übertragungsmittels zwischen zwei in einem Getriebegehäuse (8) angeordneten Kegelscheibensätzen (1, 2) eines stufenlosen Umschlingungsgetriebes, gekennzeichnet durch einen in einem Gleitschuh (4, 15) angeordneten Sensor (10, 16), der an einer durch eine Feder (6) belasteten Schwinge (5) befestigt ist, die ihrerseit in einem Drehgelenk (7) ebenso wie die Feder (6) mit dem Getriebegehäuse (8) verbunden ist, wobei der Gleitschuh (4, 15) derart zu dem Übertragungselement (3) positioniert ist, daß mit dem Sensor (10, 16) Abstandsmarkierungen entlang des Übertragungsmittels (3) erfaßbar sind.

2. Vorrichtung gemäß Anspruch 1, dadurch gekennzeichnet, daß der Sensor (10, 16) als elektromagnetisch oder optisch arbeitender Sensor, vorzusweise als Hall-Sensor oder Foto-Sensor ausgebildet ist.

3. Vorrichtung nach Anspruch 1 oder 2, dadurch gekennzeichnet, daß der Gleitschuh (4) eine Innenkontour (14) aufweist, mit der dieser auf Bauteilen (11, 12) des Übertragungsmittels (3) gleitend aufliegt.

4. Vorrichtung nach Anspruch 1 oder 2, dadurch gekennzeichnet, daß der Gleitschuh (15) Außenkontouren (22, 23) aufweist, die zur Abstützung an den Kegelscheibeninnenseiten (17, 19) dienen.
